# EUROPÄISCHE PATENTANMELDUNG

(11) **EP 1 467 466 A2**
(43) Veröffentlichungstag der Anmeldung: **13.10.2004**
(21) Anmeldenummer: 04405221.5
(22) Anmeldetag: 08.04.2004
(51) Int. Cl.: H02K 3/50, H02K 15/085

(54) **Stator einer elektrischen Maschine sowie Verfahren und Vorrichtung zum Wicklen des Stators**

(30) Priorität: 11.04.2003 CH 6632003
(71) Anmelder: ATS Wickel- und Montagetechnik AG, 5436 Würenlos (CH)
(72) Erfinder: Walter, Patric, 8105 Regensdorf ZH (CH)
(74) Vertreter: Patentanwälte Breiter + Wiedmer AG

(57) **Zusammenfassung**

Ein Stator (10) einer elektrischen Maschine weist eine Vielzahl von rotationssymmetrisch zu einer Statorachse (a) angeordnete, radial einwärts ragende, zwischen zwei Stirnseiten (18) des Stators (10) verlaufenden und Nuten (16) begrenzenden Polhörnern (14) auf. An jeder Stirnseite (18) ist eine Endscheibe (20) aus einem elektrisch isolierenden Material mit konzentrisch zur Statorachse (a) angeordneten und von der Endscheibe (20) axial abragenden Führungsstegen (22) so festgelegt, dass jedem Polhorn (14) ein Führungssteg (22) als Leitelement für einen stirnseitig entsprechend einem vorgegebenen Wickelschritt von einer ersten Nut zu einer zweiten Nut verlaufenden Draht einer zu wickelnden Spule zugeordnet ist.

## Beschreibung

Die Erfindung betrifft einen Stator einer elektrischen Maschine, mit einer Vielzahl von rotationssymmetrisch zu einer Statorachse angeordneten, radial einwärts ragenden, zwischen zwei Stirnseiten des Stators verlaufenden und Nuten begrenzenden Polhörnern. Im Rahmen der Erfindung liegen auch ein Verfahren und eine Vorrichtung zum Bewickeln des Stators.

Asynchronmotoren mit Einphasen- oder Dreiphasenwicklung für Wechsel- oder Drehstrombetrieb werden heute in grossen Mengen als Antriebe oder in Geräten wie Lüftern, Kühlaggregaten etc. verwendet. Bezüglich ihrer Bauart wird zwischen Innenläufer- und Aussenläufermotoren unterschieden.

Das Bewickeln des Stators eines Innenläufermotors erfolgt heute überwiegend nach dem Winding/Insert-Verfahren. Hierbei handelt es sich um ein Einziehverfahren, bei dem auf einer ersten Station die entsprechenden Feldspulen in ein sogenanntes Einziehwerkzeug gewickelt und auf einer zweiten Station alle Spulen gleichzeitig in die Nuten des isolierten Statorpaketes eingezogen werden.

Das Einziehverfahren weist jedoch folgende Nachteile auf:
- Nach dem Einziehen der Spulen in das Statorpaket müssen die Wickelköpfe auf einer separaten Station geformt und gepresst werden.
- Auf einer weiteren Maschine müssen die Wickelköpfe fixiert, d.h. mit einem Faden automatisch oder manuell abgebunden werden.
- An den Spulenenden müssen Litzen für das Verschalten der Wicklung befestigt werden, was meistens manuell durchgeführt werden muss.

Zudem erfordert eine Fertigung nach dem Einziehverfahren hohe Investitionskosten an Maschinen, Wickelwerkzeugen und Hilfsvorrichtungen, wodurch bei kleineren und mittleren Stückzahlen die Wirtschaftlichkeit nicht immer gewährleistet ist.

Aus der EP-A-1 286 452 ist eine Vorrichtung zum Bewickeln von Statoren mit mehreren Spulen bekannt. Beim Umwickeln der einzelnen Polhörner wird der Draht über einen die erforderlichen Wickelbewegungen ausführenden Drahtführer direkt um jedes Polhorn bzw. in einander benachbarte Nuten gewickelt. Der Drahtführer ist zur Ausführung einer Hubbewegung mit einer oszillierenden Wickelstange und zur Ausführung einer ersten Verschiebebewegung mit einer verschiebbaren Halterung verbunden. Eine zweite Verschiebebewegung wird vom Stator als Drehbewegung um eine Nutteilung über einen mit dem Stator gekoppelten Schaltapparat ausgeführt.

Zur Wicklung von Spulen mit einer Spulenweite von mehr als einer Nutteilung, wie sie beispielsweise bei Statoren von Asynchronmotoren vorhanden sind, kann die aus der EP-A- 1 286 452 bekannte Vorrichtung nicht eingesetzt werden.

Der Erfindung liegt die Aufgabe zugrunde, einen Stator der eingangs genannten Art so auszugestalten, dass eine Direktwicklung der einzelnen Feldspulen auch bei Spulenweiten von mehr als einer Nutteilung möglich ist.

Ein weiteres Ziel der Erfindung ist die Bereitstellung einer einfachen und auch zur wirtschaftlichen Bewicklung kleiner Stückzahlen von Statoren geeigneten Vorrichtung.

Bezüglich des Stators führt zur erfindungsgemässen Lösung der Aufgabe, dass an jeder Stirnseite eine Endscheibe aus einem elektrisch isolierenden Material mit konzentrisch zur Statorachse angeordneten und von der Endscheibe axial abragenden Führungsstegen so festgelegt ist, dass jedem Polhorn ein Führungssteg als Leitelement für einen stirnseitig entsprechend einem vorgegebenen Wickelschritt von einer ersten Nut zu einer zweiten Nut verlaufenden Draht einer zu wickelnden Spule zugeordnet ist.

Die Endscheibe dient einerseits als Isolation gegenüber dem Eisen des Stators und andererseits zur Fixierung der Wicklung.

Bei einer bevorzugten Ausführungsform der Endscheibe ragt von jedem Führungssteg wenigstens ein Trennsteg radial nach aussen ab. Damit ergeben sich zwischen Endscheibe und Trennsteg bzw. zwischen jeweils zwei Trennstegen Kammern oder Nuten zur getrennten Aufnahme von Spulen mit unterschiedlichen Wickelschritten. Durch die Trennstege ergibt sich auch eine gewünschte Isolation zwischen benachbarten Spulenwicklungen.

Bei der Wicklung von Spulen in Nuten von mit erfindungsgemäss ausgestalteten Endscheiben bestückten Statoren wird ein Draht in eine erste Nut eingelegt, an einer Stirnseite radial nach aussen, um die Führungsstege herum und entsprechend einem vorgegebenen Wickelschritt radial nach innen zu einer zweiten Nut geführt, in die zweite Nut eingelegt, an der gegenüberliegenden Stirnseite radial nach aussen, um die Führungsstege herum und zum Einlegen einer weiteren Windung radial nach innen zurück zur ersten Nut geführt. Dieser Wickelvorgang wird so lange wiederholt, bis die Spule die gewünschte Anzahl Windungen aufweist. In gleicher Art werden die weiteren Spulen entsprechend vorgegebenen Wickelschritten bis zur vollständigen Bewicklung des Stators gewickelt.

Eine zum automatischen Wickeln von Spulen in Nuten eines erfindungsgemäss ausgestalteten Stators geeignete, auf der in der EP-A-1 286 452 offenbarten Wickelmaschine aufbauende Vorrichtung umfasst einen Drahtführer, der mit einer axial in einer ersten Richtung eine Hubbewegung ausführenden Hubstange und mit einem in einer zweiten Richtung rechtwinklig zur ersten Richtung verschiebbaren Wickelstange verbunden ist, und einen Schaltapparat, der zur Ausführung einer Drehbewegung um eine in der ersten Richtung liegende Drehachse mit einem zu bewickelnden Stator verbindbar ist.

Die erfindungsgemässe Vorrichtung zeichnet sich aus durch zwei Drahtfanghaken, wobei die Längsachse der Drahtfanghaken in der zweiten Richtung liegen und die Drahtfanghaken in der ersten und zweiten Richtung verschiebbar sind. Die räumliche Lage der Drahtfanghaken ist durch Drehen um 90° um die Drahtfanghakenachse zwischen einer ersten Position mit einer in der ersten Richtung liegenden Hakenebene und einer zweiten Position mit einer rechtwinklig zur ersten Richtung liegenden Hakenebene einstellbar. Die Verschiebeund Drehbewegung der Drahtfanghaken sind mit den Hubbewegungen des Drahtführers und der Drehbewegung des Schaltapparates zur Ausführung der zum Verlegen eines Drahtes zu Spulenwindungen erforderlichen Bewegungen des Drahtführers und der Drahtfanghaken synchronisiert.

Bevorzugt ist die Wickelstange über eine Führung in der zweiten Richtung verschiebbar, wobei zur Ausführung der Verschiebebewegung vorzugsweise eine Gewindespindel angeordnet ist. Diese Gewindespindel ist mit einem Antriebsmotor verbunden.

Zweckmässigerweise ist die Wickelstange an einem entlang der Führung verschiebbaren Verstellblock festgelegt, wobei die Halterung bevorzugt entlang einer am Verstellblock angeordneten Führung in der ersten Richtung verschiebbar ist und die Gewindespindel am Verstellblock angreift.

Bei einer bevorzugten Ausführungsform der erfindungsgemässen Vorrichtung ist an der Hubstange ein Halterungsteil mit einem in der zweiten Richtung liegenden Langloch angeordnet und ein an der Wickelstange festgelegter Führungsbolzen ist im Langloch geführt.

Die erfindungsgemässe Vorrichtung in Kombination mit einem mit den erfindungsgemässen ausgestalteten Endscheiben ausgerüsteten Stator beinhaltet folgende Vorteile:
- Spulen jeder Grösse können ohne zusätzliche Wickelformen, Leitstücke und Schablonen gewickelt werden.
- Die Anordnung von Wickelstange und Drahtfanghaken ist für jede Statorgrösse universell einstellbar.
- Mit der Wickelvorrichtung ist jedes Wickelschema auf einfache Weise einstellbar und programmierbar.
- Im Bereich der Wickelköpfe erfolgt eine exakte Drahtverlegung.
- Durch die Nuten in den Endscheiben werden die Wickelköpfe fixiert, so dass das Formen und Abbinden entfällt.
- Die Spulenenden können im Bedarfsfall automatisch in am Umfang der Endscheibe angeordneten Terminal-Taschen fixiert werden.
- Das erfindungsgemässe Konzept bietet eine einfache konstruktive Lösung als Alternative für das technisch aufwendige Einziehverfahren.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine Schrägsicht auf einen Stator mit Endscheiben;
- Fig. 2 eine Schrägsicht auf eine Endscheibe des Stators von Fig. 1;
- Fig. 3 ein vergrössertes Detail einer Stirnansicht des Stators von Fig. 1;
- Fig. 4 einen Schnitt durch den Stator von Fig. 3 entlang deren Linie I-I;
- Fig. 5 eine Schrägsicht auf einen Stator mit anderen Endscheiben;
- Fig. 6 ein vergrössertes Detail einer Stirnansicht des Stators von Fig. 5;
- Fig. 7 einen Schnitt durch den Stator von Fig. 6 entlang deren Linie II-II;
- Fig. 8 - 11 den Bewegungsablauf von Drahtfanghaken und Drahtführer beim Verlegen eines Drahtes zu einer Spulenwindung;
- Fig. 12 ein Wickelschema für einen Stator eines Asynchronmotors mit Dreiphasenwicklung;
- Fig. 13 die Form einer einzelnen Drahtwindung;
- Fig. 14 eine Teilansicht der Wickelstation einer Wickelmaschine.

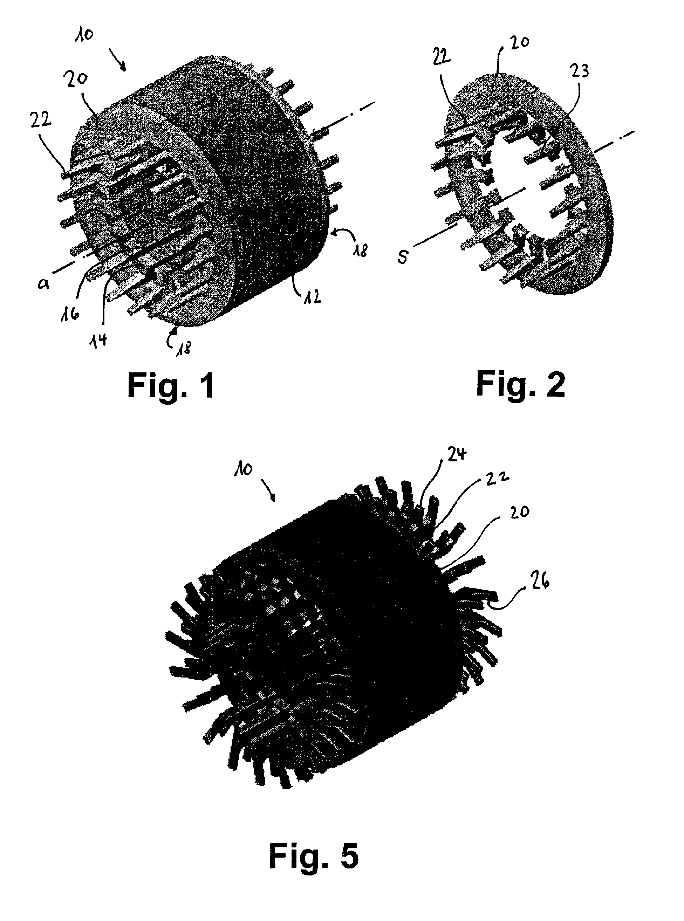

Ein aus Fig. 1 ersichtlicher Stator 10 besteht im wesentlichen aus einem ringförmigen Körper 12 mit von diesem radial nach innen abragenden Polhörnern 14, die durch Zwischenräume in Form von Nuten 16 voneinander getrennt angeordnet sind. Der beispielhaft dargestellte 18-polige Stator 10 ist Teil eines Innenläufer-Asynchronmotors. Der Stator 10 wird durch Schichten von identischen Blechlamellen zu einem Blechpaket hergestellt.

Eine in Fig. 2 gezeigte ringförmige Endscheibe 20 aus einem elektrisch isolierenden Kunststoffmaterial weist konzentrisch zu einer Scheibenachse s angeordnete und von der Endscheibe 20 axial abragende Führungsstege 22 auf. Wie in Fig. 1 gezeigt, ist an jeder Stirnseite 18 eines Stators 10 eine Endscheibe 20 positionsgenau so aufgepresst, dass jedes Polhorn 14 in seiner axialen Verlängerung in einen Führungssteg 22 übergeht. Die Führungsstege 22 dienen der Führung eines stirnseitig entsprechend einem vorgegebenen Wickelschritt von einer ersten Nut 16 zu einer zweiten Nut 16 verlaufenden Drahtes während der Wicklung einer Spule.

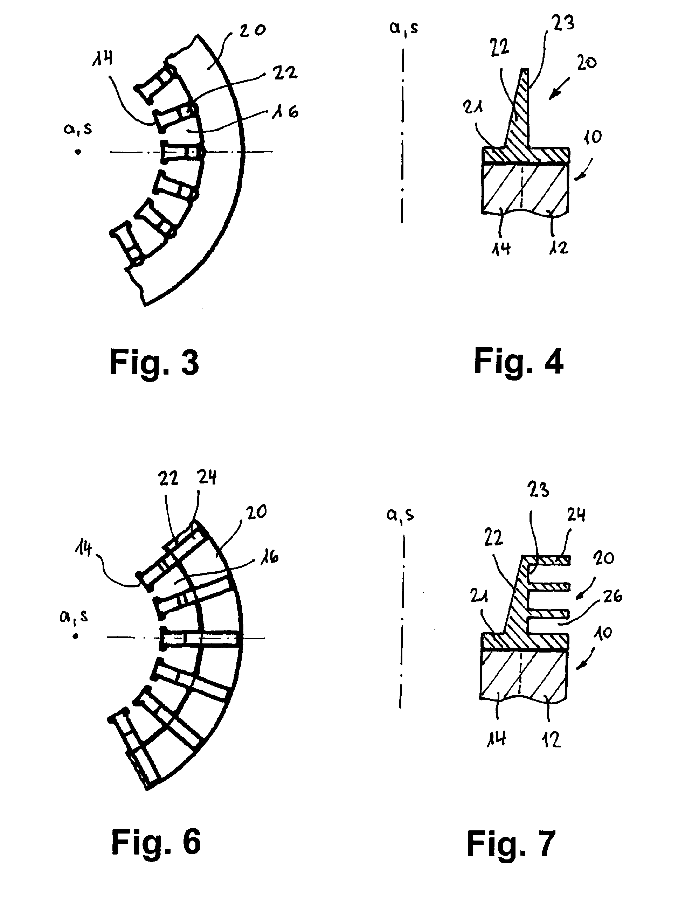

Aus den Fig. 3 und 4 ist erkennbar, dass jeder Führungssteg 22 einen auf der Stirnseite jedes Polhornes 14 aufliegenden und dem Querschnitt der Polhörner 14 angepassten Fussteil 21 aufweist. Der vom Fussteil 21 gestützte Führungssteg 22 weist eine parallel zur Scheibenachse s liegende, radial nach aussen gerichtete Stegwand 23 auf.

Bei dem in Fig. 5 gezeigten Stator 10 mit aufgesetzten Endscheiben 20 ist jeder Führungssteg 22 durch drei von der Stegwand 23 radial nach aussen abragende Trennstege 24 in drei querschnittlich U-förmige Nuten oder Kammern 26 unterteilt. Diese spezielle Ausbildungsform der Trennstege 24 ermöglicht eine kompakte Wicklung von drei sich stirnseitig überlagernden Spulen, wobei jeder Spule eine andere Kammer 26 zugeordnet wird, so dass die drei Spulenstränge an den Stirnseiten 18 des fertig gewickelten Stators 10 übereinander liegen.

Die Anzahl der Trennstege 24 muss nicht notwendigerweise der Anzahl sich stirnseitig überlagernder Spulen entsprechen, sondern kann auch kleiner sein. Es ist auch nicht in jedem Fall erforderlich und zweckmässig, alle sich überlagernden Spulen in getrennten Kammern 26 zu führen, da es letztlich nur darauf ankommt, dass die Spulen an den Stirnseiten kompakt gewickelt sind.

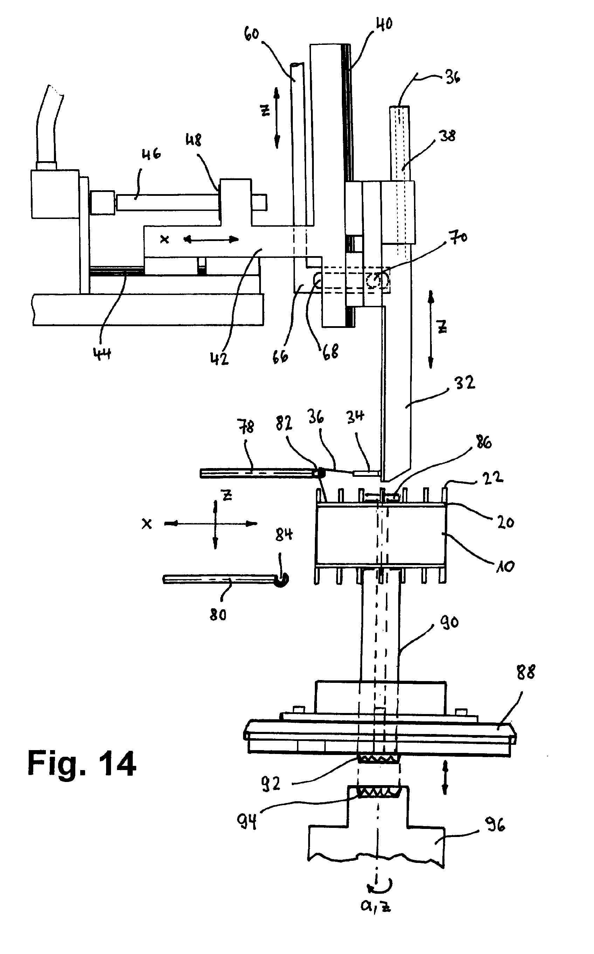

Bei einer in Fig. 14 gezeigten Wickelmaschine ist eine Wickelstange 32 für eine Drahtführerdüse 34 in einer senkrecht angeordneten, parallel zur Rotationsachse a des Stators 10 liegenden ersten Führungsschiene 40 gleitend gelagert. Die Drahtführerdüse 34 ist am unteren Ende der Wickelstange 32 festgelegt und weist bezüglich des Stators 10 und seiner Rotationsachse a radial nach aussen. Die Wickelstange 32 weist eine Bohrung 38 zur Drahtführung auf. Draht 36 wird über die Bohrung 38 der Drahtführerdüse 34 zugeführt.

Die erste Führungsschiene 40 ist Teil eines Verstellblockes 42, welcher auf einer zweiten ortsfesten Führungsschiene 44 in einer horizontalen Verschiebungsachse x in Richtung auf die der Rotationsachse a des Stators entsprechende vertikale Achse z verschiebbar ist. Der Verstellblock 42 ist über eine in einem Gewinde 48 im Verstellblock 42 gelagerte Gewindespindel 46 auf der ersten Führungsschiene 40 verschiebbar. Die Gewindespindel 46 ist mit einem Antriebsmotor verbunden.

In einem Lagerblock ist eine in der vertikalen Achse z verschiebbare Hubstange 60 gelagert. Zur Ausführung von Hubbewegungen in der Achsenrichtung z ist die Hubstange 60 an ihrem oberen Ende als Gewindespindel ausgebildet, die mit einem Antriebsmotor zur Ausführung der Hubbewegungen der Hubstange 60 verbunden ist.

Am unteren Ende der Hubstange 60 ist ein horizontal abragendes Halterungsteil 66 mit einem ebenfalls in horizontaler Richtung x verlaufenden Langloch 68 angeordnet. Das Langloch 68 dient der Aufnahme eines seitlich an der Wickelstange 32 angebrachten Führungsbolzens 70.

Ein Schaltapparat 96 dient der Ausführung einer Drehbewegung des Stators 10 um seine Achse a. Während des Wickelvorganges ist der Stator 10 in einer Spannvorrichtung 86 fixiert. Eine in einer Transportpalette 88 drehbar gelagerte Welle 90 ist mit der Spannvorrichtung 86 starr verbunden. Das freie Ende der Welle 90 ist als Kupplungsstück 92 ausgebildet, ein entsprechendes Gegenkupplungsstück 94 ist Teil des Schaltapparates 96. In der Wickelposition greift das Kupplungsstück 92 in das Gegenkupplungsstück 94 ein und stellt damit die Verbindung mit dem Schaltapparat 96 her. Die Transportpalette 88 wird über einen aus Gründen der Übersichtlichkeit in der Zeichnung nicht dargestellten Palettenförderer mittels Transportbändern zur Wickelstation hin und von dieser auch wieder weg geführt.

Der Drahtführerdüse 34 sind zwei in ihrer rechtwinklig zur Achsrichtung z liegenden Achsrichtung x und in der Achsrichtung z bewegbare Drahtfanghaken 78, 80 zugeordnet. Die Drahtfanghaken 78, 80 sind um die Drahtfanghakenachsen zur Einstellung von zwei Endpositionen um 90° drehbar.

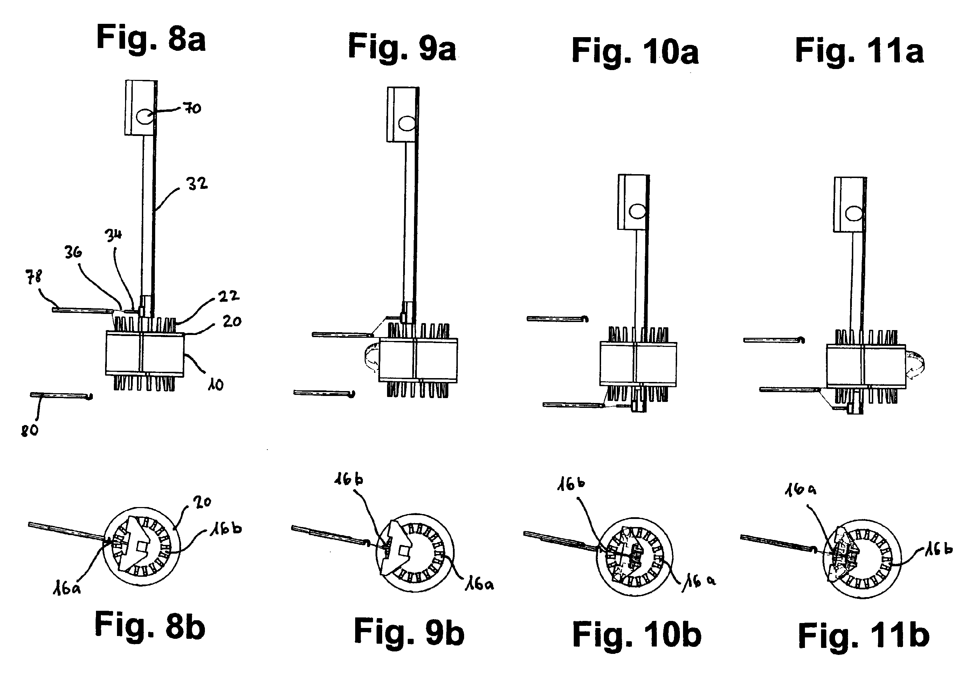

Die Funktionsweise der von den Endscheiben 20 abragenden Führungsstege 22 beim Bewickeln eines Stators 10 mit einer erfindungsgemässen Wickelmaschine wird nachstehend anhand des in den Fig. 8 bis 11 dargestellten Bewegungsablaufs beim Einlegen einer Drahtwindung in Nuten 16a,b entsprechend einem vorgegebenen Wickelschritt näher erläutert.

Wie aus den Zeichnungen 8 bis 11 ersichtlich, ist die Drahtführerdüse 34 in z-Richtung durch den Stator 10 mit den Endscheiben 20 hindurch zwischen zwei ausserhalb der Endscheiben 20 liegenden Endpositionen verschiebbar. In diesen beiden Endpositionen ist die Drahtführerdüse 34 in x-Richtung verschiebbar.

Die beiden Drahtfanghaken 78, 80 sind im Bereich der beiden Endscheiben 20 positioniert und liegen mit der Wickelstange 32 und der Drahtführerdüse 34 in einer gemeinsamen Ebene.

Der Stator 10, dessen Statorachse a während des Wickelvorganges in z-Richtung weist, ist um jeweils ein ganzes Vielfaches einer Nutteilung entsprechend einem vorgegebenen Wickelschritt über einen Schaltapparat in beiden Richtungen um die Statorachse a verschaltbar.

Bei der nachfolgenden Beschreibung des Bewegungsablaufs der Drahtführerdüse 34 und der Drahtfanghaken 78, 80 wird vorausgesetzt, dass bereits eine Wicklung in entsprechende Nuten 16a, b eingelegt und die Drahtführerdüse 34 von der unteren in die obere Wickelposition hochgefahren ist. Der obere Drahtfanghaken 78 hat den Draht 36 mit horizontal liegender Hakenebene gefasst und hat sich bereits bis gegen den Rand der Endscheibe 20 radial in x-Richtung nach aussen bewegt. Der untere Drahtfanghaken 80 befindet sich in seiner inaktiven Position ausserhalb des Wickelbereiches. In den Fig. 8a und 8b ist diese Ausgangslage als Momentaufnahme festgehalten.

Der obere Drahtfanghaken 78 bewegt sich nun in x-Richtung über den Rand der Endscheibe 20 hinaus und in z-Richtung nach unten auf die für die Wicklung vorgesehene Höhe. Gleichzeitig verschiebt sich auch die Drahtführerdüse 34 in x-Richtung radial so weit nach aussen, dass der zwischen der Spitze der Drahtführerdüse 34 und dem Drahtfanghaken 78 verlaufende Draht 36 einen genügenden Abstand zu den Führungsstegen 22 der Endscheibe 20 aufweist und die Drehbewegung des Stators 10 während des nachfolgenden Verschaltvorganges nicht behindert. In dieser Position erfolgt eine Verschaltung des Stators 10 um ein ganzes Vielfaches einer Nutteilung entsprechend dem vorgegebenen Wickelschritt. Die Fig. 9a und 9b zeigen die Lage der Wickelwerkzeuge nach erfolgter Verschaltung.

Die Drahtführerdüse 34 verschiebt sich in x-Richtung radial nach innen. Gleichzeitig dreht sich der obere Drahtfanghaken 78 im Uhrzeigersinn um 90°, wodurch die Hakenöffnung 82 bei nunmehr senkrecht stehender Hakenebene nach unten geöffnet ist. Die Drahtführerdüse 34 wird durch den Stator 10 hindurch in ihre untere Position verschoben. Gleichzeitig bewegt sich der obere Drahtfanghaken 78 in seine inaktive Neutralposition in z-Richtung nach oben. Durch die beiden gegenläufigen Bewegungen von Drahtführerdüse 34 und Drahtfanghaken 78 gleitet der Draht 36 aus der Hakenöffnung 82. Der untere Drahtfanghaken 80 verschiebt sich in x-Richtung radial einwärts, ergreift den Draht 36 mit seiner Hakenöffnung 84 bei horizontal liegender Hakenebene im Bereich der Spitze der Drahtführerdüse 34 und zieht ihn zwischen zwei benachbarten Führungsstegen 22 radial nach aussen, wodurch der Draht 36 gleichzeitig in die Nut 16b eingelegt wird. Die Fig. 10a und 10b zeigen die Position der Drahtführerdüse 34 und der Drahtfanghaken 78, 80 nach dem Einlegen des Drahtes 36 in die Nut 16b. Die untere Endstellung der Drahtführerdüse 34 mit aktivem unterem Drahtfanghaken 80 entspricht der in den Fig. 8a und 8b gezeigten Position der Drahtführerdüse 34 in der oberen Endlage mit aktivem oberem Drahtfanghaken 78.

Der untere Drahtfanghaken 80 bewegt sich in x-Richtung radial nach aussen und in z-Richtung auf die Höhe der Führungsstege 22. Die Drahtführerdüse 34 verschiebt sich ebenfalls in x-Richtung radial nach aussen, bis der zwischen der Spitze der Drahtführerdüse 34 und dem unteren Drahtfanghaken 80 verlaufende Draht 36 die freie Rotation des Stators 10 beim Verschaltvorgang nicht behindert. Es folgt eine Verschaltung entsprechend dem vorgegebenen Wickelschritt um dieselbe Anzahl Nutteilungen in entgegengesetzter Drehrichtung, so dass der Draht 36 an der Stirnseite des Stators 10 den Führungsstegen 22 entlang in den Bereich der ersten Nut 16a zurückgeführt wird. Die Fig. 11a und 11 b zeigen die Lage der Wickelwerkzeuge nach dem Verschaltvorgang.

Die Drahtführerdüse 34 wird wiederum zunächst in x-Richtung radial nach innen und nachfolgend in z-Richtung durch den Stator 10 hindurch in die obere Endposition verfahren. Während der Bewegung der Drahtführerdüse 34 in z-Richtung verschiebt sich der untere Drahtfanghaken 80 gegenläufig in z-Richtung, wobei gleichzeitig eine Drehung des Hakens im Uhrzeigersinn um 90° erfolgt, so dass bei nun senkrecht stehender Hakenebene der Draht 36 aus der nun nach oben offenen Hakenöffnung 84 gleitet. Der untere Drahtfanghaken 80 begibt sich hierbei wieder in die inaktive Ruheposition und der obere Drahtfanghaken 78 verschiebt sich zum Ergreifen des Drahtes 36 in z-Richtung nach oben und in x-Richtung radial nach innen, wodurch wieder die in den Fig. 8a und 8b gezeigte Stellung der Wickelwerkzeuge erreicht ist.

Der vorstehend beschriebene Bewegungsablauf der Wickelwerkzeuge wird so lange wiederholt, bis die gewünschte Anzahl Windungen der Spule eines Wickelschrittes erreicht ist. Auf die oben beschriebene Weise erfolgt auch die Wicklung der restlichen Spulen entsprechend den weiter vorgegebenen Wickelschritten.

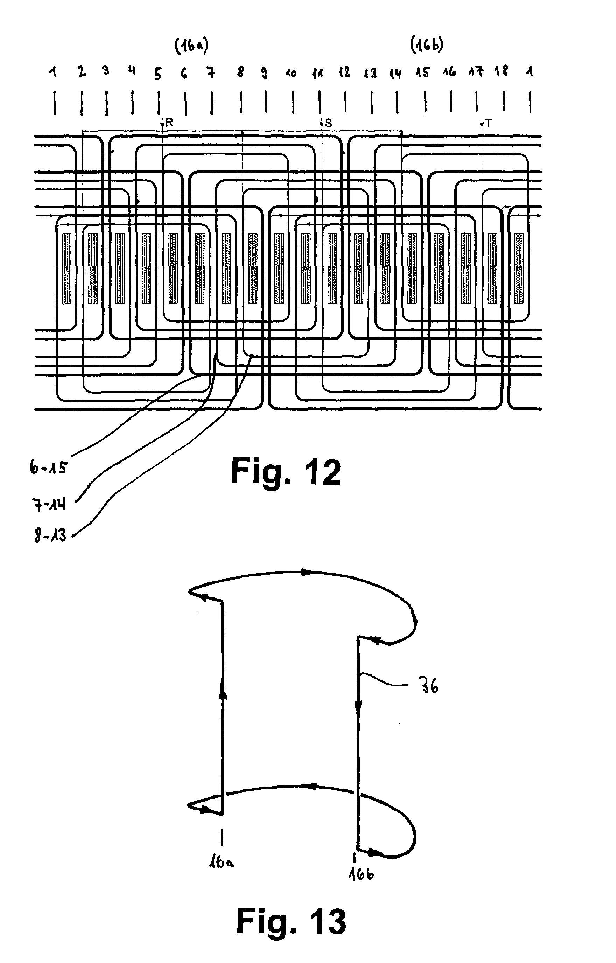

Das in Fig. 12 gezeigte Wickelschema für einen Stator eines Asynchronmotors mit einer konzentrischen Wicklung zeigt die Verteilung von 18 Spulen mit je 6 grossen, mittleren und kleinen Windungen in die von 1 bis 18 nummerierten Nuten entsprechend drei verschiedenen Wickelschritten. Drei Spulen mit den Wickelschritten 6-15, 7-14 und 8-13 mit entsprechend 9, 7 bzw. 5 dazwischenliegenden Polhörnern sind beispielhaft angegeben. Die drei unterschiedlich grossen Spulen können beispielsweise bei den in Fig. 5 gezeigten Endscheiben 20 in drei verschiedenen, durch die von den Führungsstegen 22 abragenden Trennstege 24 gebildeten Ebenen gewickelt werden.

Die in Fig. 13 gezeigte Form einer einzelnen, entsprechend einem vorgegebenen Wickelschritt in die Nuten 16a,b eingelegten Windung ist bei nicht unmittelbar benachbarten Nuten ohne die erfindungsgemässen Endscheiben nicht herstellbar.

## Patentansprüche

1. Stator einer elektrischen Maschine, mit einer Vielzahl von rotationssymmetrisch zu einer Statorachse (a) angeordneten, radial einwärts ragenden, zwischen zwei Stirnseiten (18) des Stators (10) verlaufenden und Nuten (16) begrenzenden Polhörnern (14),
**dadurch gekennzeichnet, dass**
an jeder Stirnseite (18) eine Endscheibe (20) aus einem elektrisch isolierenden Material mit konzentrisch zur Statorachse (a) angeordneten und von der Endscheibe (20) axial abragenden Führungsstegen (22) so festgelegt ist, dass jedem Polhorn (14) ein Führungssteg (22) als Leitelement für einen stirnseitig entsprechend einem vorgegebenen Wickelschritt von einer ersten Nut (16a) zu einer zweiten Nut (16b) verlaufenden Draht (36) einer zu wickelnden Spule zugeordnet ist.

2. Stator nach Anspruch 1, **dadurch gekennzeichnet, dass** von jedem Führungssteg (22) wenigstens ein Trennsteg (24) zur stirnseitigen Trennung von Spulen mit unterschiedlichen Wickelschritten radial nach aussen abragt.

3. Verfahren zum Wickeln von Spulen in Nuten eines Stators (10) nach Anspruch 1 oder 2, **dadurch gekennzeichnet, dass** ein Draht (36) in eine erste Nut (16a) eingelegt, an einer Stirnseite (18) radial nach aussen, um die Führungsstege (22) herum und entsprechend einem vorgegebenen Wickelschritt radial nach innen zur zweiten Nut (16b) geführt, in die zweite Nut (16b) eingelegt, an der anderen Stirnseite (18) radial nach aussen, um die Führungsstege (22) herum und für eine weitere Windung radial nach innen zurück zur ersten Nut (16a) geführt und der Wickelvorgang so lange wiederholt wird, bis die Spule die gewünschte Anzahl Windungen aufweist, und dass in gleicher Art die weiteren Spulen bis zur vollständigen Bewicklung des Stators (10) entsprechend vorgegebenen Wickelschritten gewickelt

4. Vorrichtung zum automatischen Wickeln von Spulen in Nuten eines Stators nach dem Verfahren von Anspruch 3, mit einem Drahtführer (34), der mit einer axial in einer ersten Richtung (z) verschiebbaren Hubstange (60) und mit einer in einer zweiten Richtung (x) rechtwinklig zur ersten Richtung (z) verschiebbaren Wickelstange (32) verbunden ist, und mit einem Schaltapparat (96), der zur Ausführung einer Drehbewegung um eine in der ersten Richtung (z) liegende Drehachse mit einem zu bewickelnden Stator (10) verbindbar ist, **gekennzeichnet durch** zwei von einander beabstandeten Drahtfanghaken (78,80), wobei die Längsachsen der Drahtfanghaken (78,80) in der zweiten Richtung (x) liegen und die Drahtfanghaken (78,80) in der ersten Richtung (z) und in der zweiten Richtung (x) verschiebbar sind, die räumliche Lage der Drahtfanghaken (78,80) **durch** Drehen um 90° um die Drahtfanghakenachsen zwischen einer ersten Position mit einer in der ersten Richtung (z) liegenden Hakenebene und einer zweiten Position mit einer rechtwinklig zur ersten Richtung (z) liegenden Hakenebene einstellbar ist und die Verschiebe- und Drehbewegung der Drahtfanghaken (78,80) mit den Hubbewegungen des Drahtführers (34) und der Drehbewegung des Schaltapparates (96) zur Ausführung der zum Verlegen eines Drahtes (36) zu Spulenwindungen erforderlichen Bewegungen des Drahtführers (34) und der Drahtfanghaken (78,80) synchronisiert sind.

5. Vorrichtung nach Anspruch 4, **dadurch gekennzeichnet, dass** die Wickelstange (32) über eine Führung (44) in der zweiten Richtung (x) verschiebbar ist.

6. Vorrichtung nach Anspruch 5, **dadurch gekennzeichnet, dass** zur Ausführung der Verschiebebewegung eine Gewindespindel (46) angeordnet ist.

7. Vorrichtung nach Anspruch 6, **dadurch gekennzeichnet, dass** die Gewindespindel (46) mit einem Antriebsmotor (52) verbunden ist.

8. Vorrichtung nach Anspruch 6 oder 7, **dadurch gekennzeichnet, dass** die Wickelstange (32) an einem entlang der Führung (44) verschiebbaren Verstellblock (42) festgelegt ist.

9. Vorrichtung nach Anspruch 8, **dadurch gekennzeichnet, dass** die Wickelstange (32) entlang einer am Verstellblock (42) angeordneten Führung (40) in der ersten Richtung (z) verschiebbar ist und die Gewindespindel (46) am Verstellblock (42) angreift.

10. Vorrichtung nach einem der Ansprüche 4 bis 9, **dadurch gekennzeichnet, dass** an der Hubstange (60) ein Halterungsteil (66) mit einem in der zweiten Richtung (x) liegenden Langloch (68) angeordnet und ein an der Wickelstange (32) festgelegter Führungsbolzen (70) im Langloch (68) geführt ist.
